# EUROPEAN PATENT SPECIFICATION

(11) **EP 1 073 548 B1**
(45) Date of publication and mention of the grant of the patent: **02.01.2003**
(21) Application number: 98918495.7
(22) Date of filing: 21.04.1998
(51) Int. Cl.: B29C 33/38, B29C 47/12, B29C 45/37, B29C 33/40

(54) **FLOW CHANNEL BLOCK AND METHOD OF MAKING**
FLIESSKANALBLOCK UND VERFAHREN ZU DESSEN HERSTELLUNG
BLOC DE CANAL D'ECOULEMENT ET PROCEDE DE FABRICATION

(43) Date of publication of application: 07.02.2001
(73) Proprietor: THE GOODYEAR TIRE & RUBBER COMPANY, Akron, Ohio 44316-0001 (US)
(72) Inventor: VARGO, Richard, David, Stow, OH 44224 (US); BURG, Gary, Robert, Canton, OH (US)
(74) Representative: Leitz, Paul
(86) International application number: US9807971
(87) International publication number: WO99054107

(56) References cited:
- DE-A- 19 529 077
- GB-A- 2 089 720
- US-A- 4 858 881
- US-A- 5 057 258

## Description

### Technical Field

This invention relates to experimental flow channel blocks and the method of making inserts of curable plastic material to change the size and shape of the flow channels.

### Background Art

In the design and production of experimental flow channel blocks and other metal components the optimum contour of the flow channel has been provided by cut and try machining. This is an expensive and time consuming process. Machining metal inserts to change the flow channel contour has also not been satisfactory because of the time required and the difficulty in machining the inserts to fit in the flow channels. Utilizing a curable plastic material to produce a tire mold is disclosed in U.S. Patent No. 5,449,483 where the plastic is used as a resin backing for a reinforced shell formed on a model. Also in U.S. Patent No. 4, 858,881, a tire mold surface is provided by pouring an epoxy over a tire sidewall in a mold box. Patterns have also been used in making molds for casting metal products, however, none of these methods have suggested an inexpensive method of modifying a flow channel to determine the optimum contour for the flow of extrudates, especially those used for tire components.

### Disclosure of Invention

The present invention is directed to a method of providing a flow channel of the optimum size and shape in a metal flow channel block with a minimum cost and in a short period of time. The existing flow channel in the flow channel block is filled with a blank of an easily machinable material, such as machinable wax. This blank hardens and after removal from the flow channel recess may be easily machined to provide a pattern having a size and shape believed to have the optimum contour for a particular operation. A release agent may be applied to the pattern which may then be placed in the flow channel with a thermally conductive epoxy casting resin. After the epoxy is cured and hardened to form an insert, the pattern is removed. The blank may also be an easily machinable block of material of a different shape than the flow channel.

In accordance with one aspect of the invention, there is provided a method of changing the contour of a first recess in a body of solid material to provide a second recess characterized by;
(a) shaping a pattern having the size and shape of the second recess,
(b) placing the pattern and a curable plastic material in the first recess,
(c) hardening the curable plastic material to form an insert; and
(d) removing the pattern from the insert to form the second recess.

In accordance with another aspect of the invention, there is provided a flow channel block having a first recess characterized by an insert of curable plastic material in said first recess, a second recess in said insert providing a flow channel having a revised contour and being formed by a pattern placed in said first recess with said curable plastic material of said insert in a plastic condition and removed after hardening of said curable plastic material.

### Brief Description of Drawings

Fig. 1 is a schematic elevation of a flow channel block having a flow channel or first recess with the ends of the flow channel closed with end plate dams.

Fig. 2 is an end view taken along line 2-2 in Fig. 1.

Fig. 3 is another end view of the flow channel block taken along line 3-3 in Fig. 1.

Fig. 4 is a sectional view taken along line 4-4 in Fig. 2.

Fig. 5 is a plan view taken along line 5-5 in Fig. 1.

Fig. 6 is a plan view of a blank made by filling the recess in the flow channel block with a machinable material.

Fig. 7 is an end view of the blank taken along line 7-7 in Fig. 6.

Fig. 8 is a side view of the blank taken along line 8-8 in Fig. 6.

Fig. 9 is a view like Fig. 6 showing the blank after shaping to a new flow channel contour.

Fig. 10 is an end view like Fig. 7 taken along line 10-10 in Fig. 9.

Fig. 11 is a side view like Fig. 8 taken along line 11-11 in Fig. 9.

Fig. 12 is an elevation of the flow channel block shown in Fig. 1 with the end plate dams and a cover plate installed and with the formed blank shown in Figs. 9, 10 and 11 placed in the flow channel. The curable plastic material is shown interposed between the blank and the surface of the flow channel to form the second recess having the changed contour.

Fig. 13 is a sectional view taken along line 13-13 in Fig. 12.

Fig. 14 is an end view taken along line 14-14 in Fig 12.

Fig. 15 is a plan view taken along line 15-15 in Fig. 12.

Fig. 16 is a sectional view taken along line 16-16 in Fig. 14.

### Detailed Description of the Invention

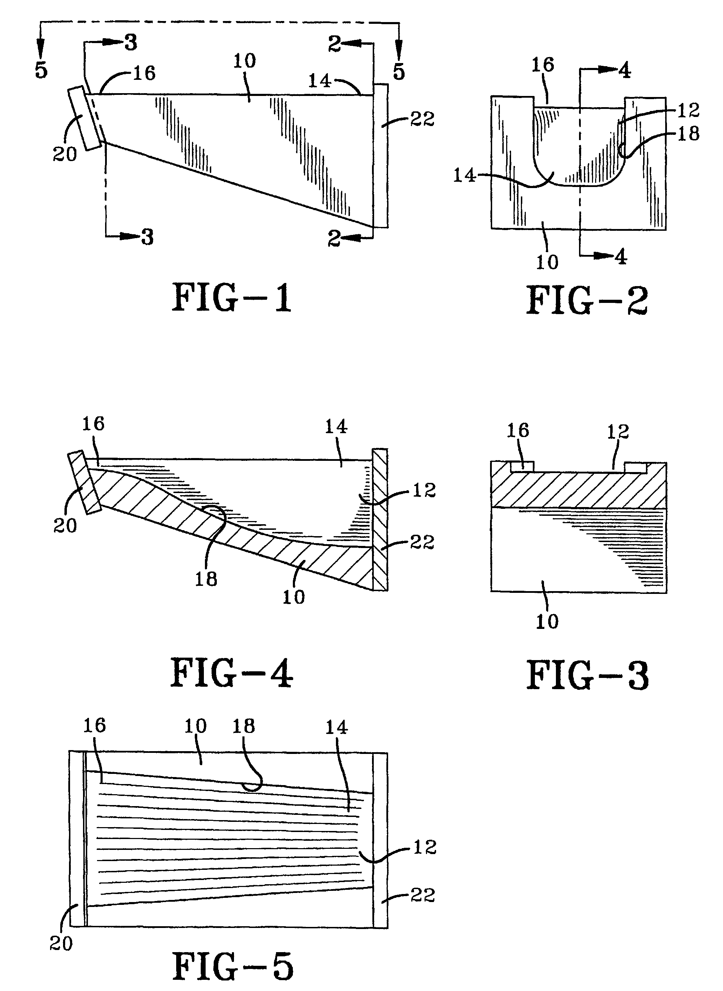

Referring to Figs. 1-5, a body of solid material, such as flow channel block 10, which may be of steel or other durable material is shown. A flow channel, hereinafter referred to as a first recess 12 is cast or machined with an entry end 14 and an exit end 16. The first recess 12 has a surface 18 with a contour for changing the flow of an extrudate from the relatively round cross section at the entry end 14 to the relatively flat rectangular section at the exit end 16 as shown in Figs. 2 and 3.

Dam members, such as closure plates 20 and 22, may be mounted at the ends 14 and 16 to enclose the space surrounded by the surface 18 of the first recess 12.

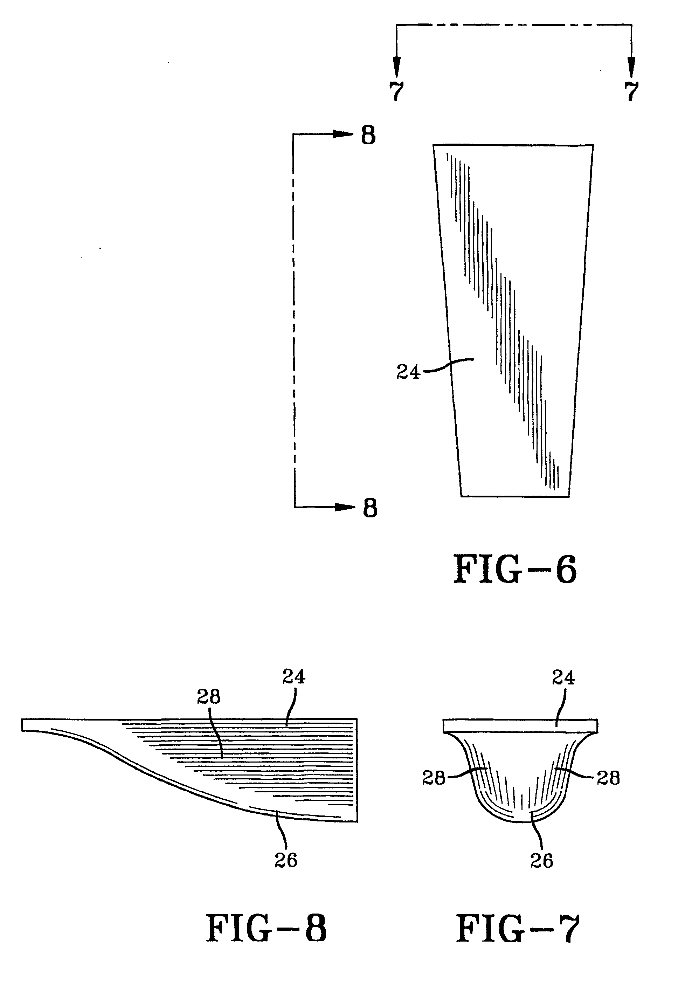

In accordance with the method of this invention, the first recess 12 is filled with a substance such as machinable wax to provide a temporary casting or blank 24 of the first recess. The most desirable material should have a low shrinkage upon setting. A release agent may be needed to release the cast parts, such as the blank 24, shown in Figs. 6, 7 and 8, from the flow channel block 10 after cooling of the wax.

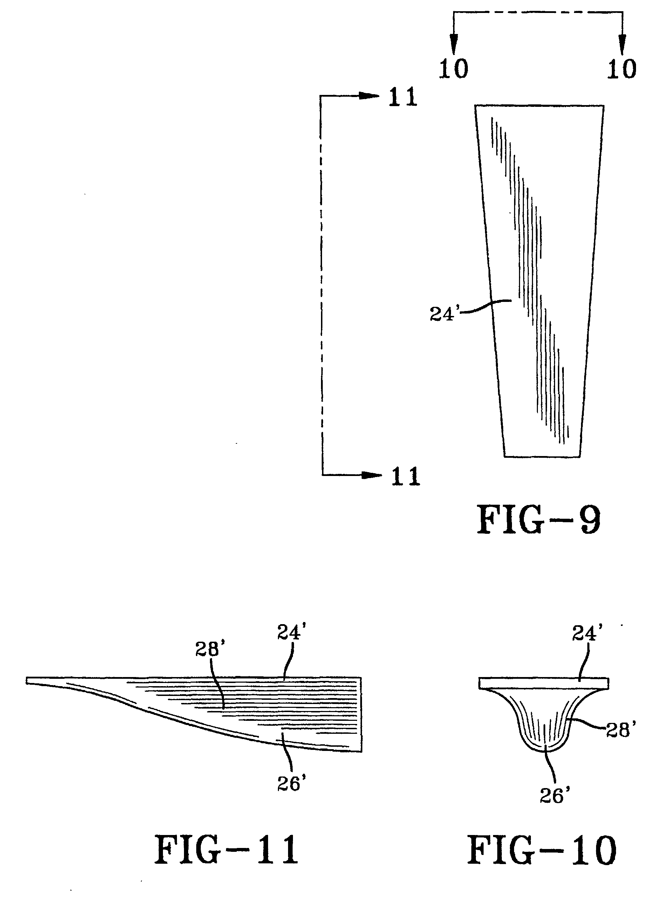

As shown in Figs. 9, 10 and 11, the blank 24 may be machined to a desired new contour, providing a machined blank 24' having material removed from the bottom surface 26 and side surfaces 28 of the blank 24, providing revised bottom surfaces 26' and revised side surfaces 28', as shown in Figs. 10 and 11.

The pattern provided by the machined blank 24' may also be provided by forming a blank of clay or other easily moldable material which does not require machining.

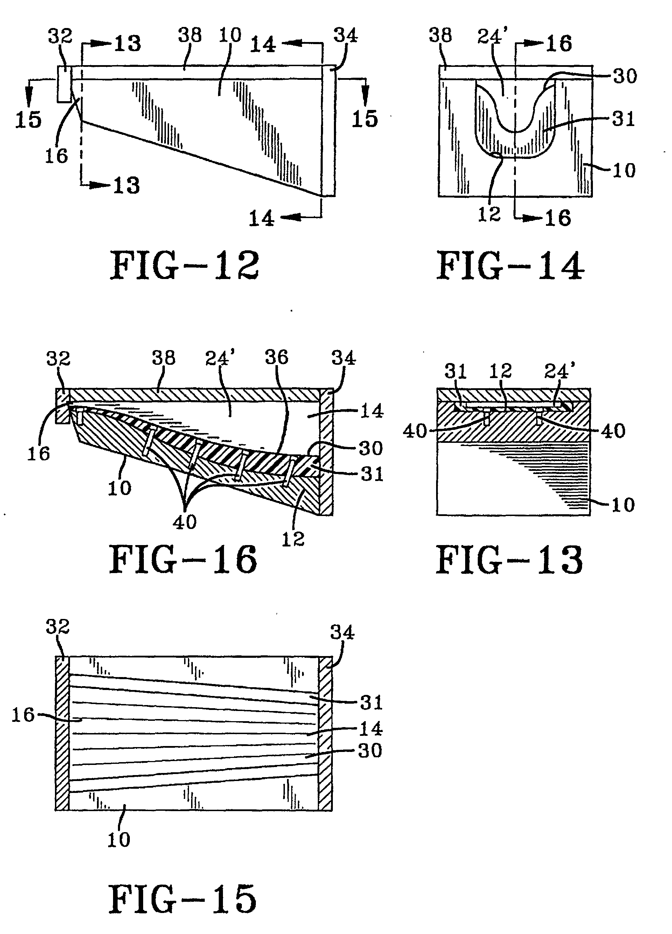

Referring to Figs. 13, 14, 15 and 16, the machined blank 24', which has been machined to provide a pattern for a second recess 30 is placed in the first recess 12 and a curable plastic material 36 is placed in the first recess 12 with the machined blank 24' to form an insert 31 with the second recess in the form of a channel 30 shown in Figs. 13, 14, 15 and 16.

The curable plastic material 36 may be in a fluid form, which requires the machined blank 24' to be held in position with a cover plate 38 to which the blank may be screwed, or the material may be in a plastic state, so that the machined blank 24' may be pressed into position and held there by the plastic material.

A suitable curable plastic material may be a room temperature castable epoxy resin which is thermally conductive with low shrinkage and medium viscosity. Hardeners are preferably used with the epoxy resin.

After the insert 31 of curable plastic material has hardened at room temperature, the machined blank 24' or pattern of other material may be removed, and according to a recommended cure schedule, the finished epoxy insert 31 with the second recess 30 is then mounted in the first recess 12 and may be held in place by bolts 40, threaded in the wall of the flow channel block first recess 12. The flow channel block 10 may then be installed for experimental operation with the revised flow channel 30 of the second recess. If this revised flow channel 30 proves satisfactory, a permanent flow channel block having the revised contour may be made of steel for production purposes.

While a certain representative embodiment and details have been shown for the purpose of illustrating the invention, it will be apparent to those skilled in the art that various changes and modifications may be made therein without departing from the scope of the invention.

## Claims

1. A method of changing the contour of a first recess (12) in a body of solid material to provide a second recess (30) with a revised contour **characterized by**:
(a) shaping a pattern (24') having the size and shape of said second recess;
(b) placing said pattern (24') and a curable plastic material (36) in a plastic condition in said first recess (12);
(c) hardening said curable plastic material to form an insert (31); and
(d) removing said pattern (24') from said insert to form said second recess.

2. The method of claim 1 further **characterized by** partially filling said first recess (12) with said curable plastic material (36) in a plastic condition before placing said pattern (24') in said first recess.

3. The method of claim 1 further **characterized by** shaping said pattern (24') by forming a blank (24) having the size and shape of said first recess (12) and then machining said blank to the size and shape of said second recess (30).

4. The method of claim 1 wherein said first recess (12) is a flow channel in said surface and extends between opposite ends (14,16) of said body further **characterized by** closing said flow channel at said opposite ends by dams (32,34) to contain said curable plastic material.

5. The method of claim 1 further **characterized by** forming said pattern from a moldable material.

6. The method of claim 5 further **characterized by** said moldable material being clay.

7. The method of claim 3 further **characterized by** said blank (24) for said pattern being of machinable wax and including the steps of pouring said wax into said first recess (12), solidifying said wax, and then removing said blank from said first recess after it is hardened.

8. The method of claim 1 further **characterized by** removing said curable plastic material (36) from said first recess (12) after it is formed into said insert (31), curing said insert, replacing said insert in said first recess and fastening said first insert to said body of solid material.

9. A flow channel block (10) having a first recess (12) **characterized by** an insert (31) of curable plastic material (36) in said first recess, a second recess (30) in said insert providing a flow channel having a revised contour and being formed by a pattern placed in said first recess with said curable plastic material of said insert in a plastic condition and removed after hardening of said curable plastic material.

10. The flow channel block of claim 9 further **characterized by** said insert (31) being fastened to said flow channel block (10).

11. The flow channel block of claim 9 further **characterized by** said first recess (12) extending from a first end (14) of said block (10) to a second end (16) of said block and said flow channel extending from said first end of said block to said second end of said block.

12. The flow channel block of claim 9 further **characterized by** said block (10) being of steel and said curable plastic material (36) being a thermally conductive epoxy casting resin.

## Patentansprüche

1. Verfahren zum Ändern der Kontur einer ersten Ausnehmung (12) in einem Körper aus einem festen Material, um eine zweite Ausnehmung (30) mit einer überarbeiteten Kontur zu schaffen, **gekennzeichnet durch**:
(a) Formen eines Musters (24') mit der Größe und Form der zweiten Ausnehmung;
(b) Anordnen des Musters (24') und eines aushärtbaren Kunststoffmaterials (36) in einem plastischen Zustand in der ersten Ausnehmung (12);
(c) Härten des aushärtbaren Kunststoffmaterials, um einen Einsatz (31) zu bilden; und
(d) Entfernen des Musters (24') aus dem Einsatz, um die zweite Ausnehmung zu bilden.

2. Verfahren nach Anspruch 1, ferner **gekennzeichnet durch** ein partielles Füllen der ersten Ausnehmung (12) mit dem aushärtbaren Kunststoffmaterial (36) in einem plastischen Zustand, bevor das Muster (24') in der ersten Ausnehmung angeordnet wird.

3. Verfahren nach Anspruch 1, ferner **gekennzeichnet durch** Formen des Musters (24'), indem ein Rohling (24) mit der Größe und Form der ersten Ausnehmung (12) gebildet und der Rohling dann in die Größe und Form der zweiten Ausnehmung (30) maschinell bearbeitet wird.

4. Verfahren nach Anspruch 1, worin die erste Ausnehmung (12) ein Fliesskanal in der Oberfläche ist und sich zwischen gegenüberliegenden Enden (14, 16) des Körpers erstreckt, ferner **gekennzeichnet durch** Schliessen des Fliesskanals an den gegenüberliegenden Enden **durch** Dämme (32, 34), um das aushärtbare Kunststoffmaterial einzuschließen.

5. Verfahren nach Anspruch 1, ferner **gekennzeichnet durch** Bilden des Musters aus einem formbaren Material.

6. Verfahren nach Anspruch 5, ferner **dadurch gekennzeichnet, dass** das formbare Material Lehm ist.

7. Verfahren nach Anspruch 3, ferner **dadurch gekennzeichnet, dass** der Rohling (24) für das Muster aus maschinell bearbeitbarem Wachs besteht, und einschließlich der Schritte, bei denen das Wachs in die erste Ausnehmung (12) gegossen, das Wachs verfestigt und anschließend der Rohling aus der ersten Ausnehmung entfernt wird, nachdem er gehärtet ist.

8. Verfahren nach Anspruch 1, ferner **gekennzeichnet durch** Entfernen des aushärtbaren Kunststoffmaterials (36) aus der ersten Ausnehmung (12), nachdem es in den Einsatz (31) geformt ist, Aushärten des Einsatzes, Ersetzen des Einsatzes in der ersten Ausnehmung und Befestigen des ersten Einsatzes am Körper aus festem Material.

9. Fliesskanalblock (10) mit einer ersten Ausnehmung (12), **gekennzeichnet durch** einen Einsatz (31) aus einem aushärtbaren Kunststoffmaterial (36) einer ersten Ausnehmung, wobei eine zweite Ausnehmung (30) in dem Einsatz einen Fliesskanal mit einer überarbeiteten Kontur liefert und mittels eines Musters gebildet wird, das mit dem aushärtbaren Kunststoffmaterial des Einsatzes in einem plastischen Zustand in der ersten Ausnehmung angeordnet und nach Härten des aushärtbaren Kunststoffmaterials entfernt wird.

10. Fliesskanalblock nach Anspruch 9, ferner **dadurch gekennzeichnet, dass** der Einsatz (31) am Fliesskanalbblock (10) befestigt ist.

11. Fliesskanalblock nach Anspruch 9, ferner **dadurch gekennzeichnet, dass** sich die erste Ausnehmung (12) von einem ersten Ende (14) des Blocks (10) zu einem zweiten Ende (16) des Blocks erstreckt und der Fliesskanal vom ersten Ende des Blocks zum zweiten Ende des Blocks verläuft.

12. Fliesskanalblock nach Anspruch 9, ferner **dadurch gekennzeichnet, dass** der Block (10) aus Stahl besteht und das aushärtbare Kunststoffmaterial (36) ein thermisch leitfähiges Epoxydgußharz ist.

## Revendications

1. Procédé pour modifier le profil d'un premier évidement (12) dans un corps constitué d'une matière solide afin de procurer un deuxième évidement (30) comprenant un profil révisé, ledit procédé étant **caractérisé par** le fait de :
(a) confectionner un modèle (24') possédant la dimension et la forme dudit deuxième évidement ;
(b) placer ledit modèle (24') et une matière plastique durcissable (36) à l'état plastique dans ledit premier évidement (12) ;
(c) durcir ladite matière plastique durcissable pour former une pièce rapportée (31) ; et
(d) retirer ledit modèle (24') de ladite pièce rapportée pour former ledit deuxième évidement.

2. Procédé selon la revendication 1, **caractérisé en outre par** le fait de remplir en partie ledit premier évidement (12) avec ladite matière plastique durcissable (36) à l'état plastique avant de placer ledit modèle (24') dans ledit premier évidement.

3. Procédé selon la revendication 1, **caractérisé en outre par** le fait de confectionner ledit modèle (24') en formant une ébauche (24) possédant la dimension et la forme dudit premier évidement (12) et le fait d'usiner par la suite ladite ébauche pour lui donner la dimension et la forme dudit deuxième évidement (30).

4. Procédé selon la revendication 1, dans lequel ledit premier évidement (12) est un canal d'écoulement pratiqué dans ladite surface et qui s'étend entre les extrémités opposées (14, 16) dudit corps, et **caractérisé en outre par** le fait de fermer ledit canal d'écoulement auxdites extrémités opposées par des digues (32, 34) afin de contenir ladite matière plastique durcissable.

5. Procédé selon la revendication 1, **caractérisé en outre par** le fait de former ledit modèle à partir d'une matière apte à être moulée.

6. Procédé selon la revendication 5, **caractérisé en outre par le fait que** ladite matière apte à être moulée est de l'argile.

7. Procédé selon la revendication 3, **caractérisé en outre par le fait que** ladite ébauche (24) pour ledit modèle est de la cire qui peut être usinée et englobant les étapes consistant à verser ladite cire dans ledit premier évidement (12), à solidifier ladite cire et à retirer ladite ébauche dudit premier évidement après son durcissement.

8. Procédé selon la revendication 1, **caractérisé en outre par** le fait de retirer ladite matière plastique durcissable (36) dudit premier évidement (12) après sa transformation pour obtenir ladite pièce rapportée (31), le fait de durcir ladite pièce rapportée, le fait de replacer ladite pièce rapportée dans ledit premier évidement et le fait de fixer ladite première pièce rapportée audit corps constitué d'une matière solide.

9. Bloc de canal d'écoulement (10) comportant un premier évidement (12) **caractérisé par** une pièce rapportée (31) constituée d'une matière plastique durcissable (36) dans ledit premier évidement, un deuxième évidement (30) dans ladite pièce rapportée procurant un canal d'écoulement comportant un profil révisé et étant réalisé à l'aide d'un modèle placé dans ledit premier évidement avec ladite matière plastique durcissable dudit premier évidement à l'état plastique et retiré après durcissement de ladite matière plastique durcissable.

10. Bloc de canal d'écoulement selon la revendication 1, **caractérisé en outre par le fait que** ladite première pièce rapportée (31) est fixée audit bloc de canal d'écoulement (10).

11. Bloc de canal d'écoulement selon la revendication 9, **caractérisé en outre par le fait que** ledit premier évidement (12) s'étend depuis une première extrémité (14) dudit bloc (10) jusqu'à une deuxième extrémité (16) dudit bloc et ledit canal d'écoulement s'étend depuis ladite première extrémité dudit bloc jusqu'à ladite deuxième extrémité dudit bloc.

12. Bloc de canal d'écoulement selon la revendication 9, **caractérisé en outre par le fait que** ledit bloc (10) est réalisé en acier et ladite matière plastique durcissable (36) est une résine de moulage de type époxy conduisant la chaleur.
